# EUROPEAN PATENT SPECIFICATION

(11) **EP 1 326 493 B1**
(45) Date of publication and mention of the grant of the patent: **19.05.2004**
(21) Application number: 01965422.7
(22) Date of filing: 10.09.2001
(51) Int. Cl.: A01N 25/30, A01N 33/16

(54) **AGROCHEMICAL COMPOSITION CONTAINING ACTIVITY-ENHANCING ADJUVANTS**
AGROCHEMISCHE ZUSAMMENSETZUNG MIT AKTIVITÄTSFÖRDERNDEN ZUSÄTZEN
COMPOSITION AGROCHIMIQUE CONTENANT DES ADJUVANTS A ACTIVITE AMPLIFICATRICE

(30) Priority: 29.09.2000 GB 0023912
(43) Date of publication of application: 16.07.2003
(73) Proprietor: Syngenta Limited, Guildford Surrey GU2 7YH (GB)
(72) Inventor: BEAN, Michael, John, Greensboro, NC 27409 (US); RAMSAY, Julia, Syngenta Limited, Bracknell, Berkshire RG42 6EY (GB)
(74) Representative: Ricks, Michael James
(86) International application number: PCT/GB2001/004051
(87) International publication number: WO 2002/026036

(56) References cited:
- US-A- 5 639 711
- WYRILL J B ET AL: "GLYPHOSATE TOXICITY TO COMMON MILKWEED AND HEMP DOGBANE AS INFLUENCED BY SURFACTANTS" WEED SCIENCE, WEED SCIENCE SOCIETY OF AMERICA, CHAMPAIGN, IL, US, vol. 25, no. 3, 1 May 1977 (1977-05-01), pages 275-287, XP002034447 ISSN: 0043-1745
- PATENT ABSTRACTS OF JAPAN vol. 016, no. 172 (C-0933), 24 April 1992 (1992-04-24) -& JP 04 018001 A (EARTH CHEM CORP LTD), 22 January 1992 (1992-01-22)
- PATENT ABSTRACTS OF JAPAN vol. 009, no. 180 (C-293), 25 July 1985 (1985-07-25) -& JP 60 051102 A (HOKKO KAGAKU KOGYO KK), 22 March 1985 (1985-03-22)
- PATENT ABSTRACTS OF JAPAN vol. 010, no. 310 (C-379), 22 October 1986 (1986-10-22) -& JP 61 122208 A (HOKKO CHEM IND CO LTD), 10 June 1986 (1986-06-10)

## Description

This invention relates to an agrochemical composition and in particular to an agrochemical composition containing activity-enhancing adjuvants.

Agrochemicals are generally used with an adjuvant or combination of adjuvants to provide optimum biological activity. The search is always on to provide adjuvants which provide improved activity. Much has been published on the selection of adjuvants to achieve particular effects with individual agrochemicals and classes of agrochemicals. One particular class of adjuvants are alkyl amine ethoxylates. Particular known examples of these adjuvants are tallow amine ethoxylates and cocoa amine ethoxylates such as those sold under the Ethomeen trade mark. US-A- 5 639 711 discloses for example herbicidal compositions in aqueous solution containing glyphosate and/or a salt thereof, an acetylenic surfactant, a tertiary amine alkoxylate surfactant with R being a C8-C20 alkyl and water. Similarly, Wyrill J.B. et al. (Weed Science,vol. 25, No. 3, 1977, pages 275-287) studied the effect of different surfactants alone or in combination with "Ethomeen T/15" on glyphosate activity. Because these compounds are derived from natural sources, they are mixtures of compounds with different length alkyl chains which are on average between C12 and C20. One problem with these known alkyl amine ethoxylates is that they have a rather high toxicological profile, particularly in terms of ecotoxicity. Clearly, for agrochemicals which must be applied to fields, this can be a serious drawback. We have discovered that there is a class of alkyl amine alkoxylate adjuvants which can be used in combination with a selected secondary adjuvant to give both a synergistically enhanced activity and also a surprisingly very low toxicological profile and in particular excellent ecotoxicological characteristics, and provide compositions which are especially benign to the environment. It is exceptional to find adjuvants which combine a high level of activity enhancement with low toxicity.

According to the present invention there is provided an agrochemical composition comprising
(i) an agrochemical active ingredient
(ii) an alkyl amine alkoxylate adjuvant of formula (I) and salts and amine oxides thereof 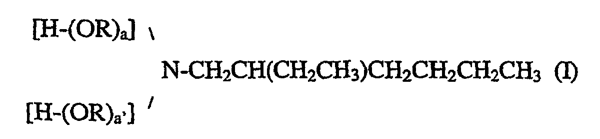 wherein the groups R are one or more C2-4 branched or straight chain alkylene groups, the sum of a and a' is 1-30, and
(iii) a second adjuvant, a 0.5% by weight solution in water of which has a dynamic surface tension of no more than 50mNm-1 at 40ms.

According to a further aspect of the present invention there is provided an agrochemical composition comprising
(i) an agrochemical active ingredient
(ii) an alkyl amine alkoxylate adjuvant of formula (I) and salts and amine oxides thereof

   [H-(OR)ₐ]₂-N-CH₂CH(CH₂CH₃)CH₂CH₂CH₂CH₃ (I)

   wherein the groups R are one or more C2-4 branched or straight chain alkylene groups, a is 1-30, and
(iii) a second adjuvant, a 0.5% by weight solution in water of which has a dynamic surface tension of no more than 50mNm-1 at 40ms.

Examples of agrochemicals are insecticides, fungicides and herbicides. Preferred agrochemicals are herbicides and fungicides, particularly herbicides. We have found that the activity enhancing effect of the adjuvants in the composition of the present invention is particularly and surprisingly marked when the agrochemical active ingredient is water-soluble. The agrochemical for use in the composition of the present invention is preferably a water-soluble electrolyte such as an agrochemical salt, in particular a herbicidally or fungicidally active agrochemical salt. Examples of herbicidally active agrochemical salts are salts of glyphosate, fomesafen, glufosinate, mecoprop p or methylchlorophenoxy acetic acid (MCPA). Typical of the commonly available salts of glyphosate are the isopropylamine, trimethylsulphonium, sodium, potassium, ammonium, and ethanolamine salts. Fomesafen is generally formulated as the sodium salt. Glufosinate is generally formulated as the ammonium salt. Mecoprop p is generally formulated as the potassium salt. Examples of fungicidally active salts are propamocarb, generally sold as the hydrochloride salt, and fosetyl, generally sold as the aluminium salt.

The groups -(OR)-, may be the same or different. Preferably, the groups -(OR)-are one or more of -OCH₂CH₂-, -OCH₂CH₂CH₂-, or -OCH₂CH(CH₃)-, more preferably one or more of -OCH₂CH₂- or -OCH₂CH(CH₃)-, that is, oxyethylene or oxyisopropylene. The groups -(OR)ₐ- and -(OR)_{a'}- can be homopolymers or random or block copolymers. Thus the definition of group -(OR)ₐ- and -(OR)_{a'}- for example includes a group

-(OCH₂CH₂)ₓ-(OCH₂-CH(CH₃))_{y}-

wherein a or a' is represented by the sum of x and y. Other combinations of for example oxyethylene, oxypropylene and oxybutylene groups in any desired order are similarly included in the definition of -(OR)ₐ- or -(OR)_{a'}- Where the groups -(OR)ₐ- and -(OR)_{a'}- are random or block copolymers, they preferably comprise at least 50% of oxyethylene groups, -(OCH₂CH₂)-. Most preferably -(OR)- are all oxyethylene groups.

The values of the sum of a and a' represent an average over the product as a whole and the sum of a and a' is not necessarily therefore an integer. Whilst the scope of the present invention includes mono-substitution on the nitrogen (a or a' is 0), alkoxylation will generally take place such that neither a or a' is 0. In many instances the average values of a and a' will be the same or similar, although as noted above the pattern of substitution may vary as between individual molecules. For the purposes of the present invention however, it is the (average) sum of a and a' which is of particular relevance and preferred values of the sum of a and a' are from 1 to 30, for example from 2 to 15 and especially from 5 to 10.

Examples of salts of the alkyl amine alkoxylate adjuvant include phosphate, sulphate, carboxylate, acetate, formate and chloride although many other suitable salts will occur to one skilled in the art. Alternatively the alkyl amine alkoxylate adjuvant can form a salt with an acidic agrochemical such as glyphosate. Salts of the alkyl amine alkoxylate adjuvant can also be prepared from acidic surfactants, for example optionally ethoxylated alkyl or alkylene ester derivatives of phosphoric acid or phosphonic acid, or optionally ethoxylated alkyl or alkylene carboxylic acids or sulphonic acids. It will be appreciated that where the relevant acid has more than one functional group, the option for different salt stoichiometries and mixed salts exists and all such variations are included herein.

Amine oxides of alkyl amine ethoxylates are compounds of formula (I) in which the amine group also carries an oxygen, and having a formula (II)

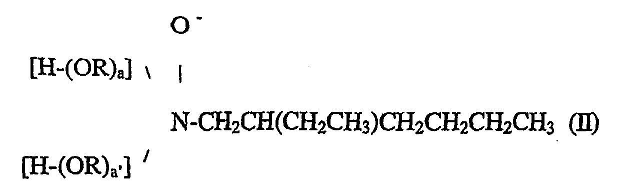

In order to provide synergistic activity enhancement on certain difficult weeds, the second adjuvant needs to be sufficiently surface active. Preferably a 0.2% by weight solution in water of the second adjuvant has a dynamic surface tension of no more than 50mNm-1 at 40ms. Even more preferably a 0.1% by weight solution in water of the second adjuvant has a dynamic surface tension of no more than 50mNm-1 at 40ms

Dynamic surface tension can be measured using the maximum bubble pressure method. Various commercial instruments are available for measuring dynamic surface tension by the maximum bubble pressure method, for example the Lauda MPT-2 maximum bubble pressure instrument. The dynamic surface tension at 40msecs is determined from the maximum pressure in a bubble blown from a capillary inserted into a surfactant solution, for a bubble surface lifetime of 40msecs.

In order to obtain the benefit of the excellent ecotoxicological properties of the amine ethoxylate, it is also necessary that the second surfactant has good ecotoxicological properties.

The second adjuvant can be one or more cationic surfactants, anionic surfactants, amphoteric surfactants or non-ionic surfactants and such surfactants are well known in the art. Examples of nonionic surfactants include alkyl glucosides (mono or poly), sugar alkyl esters, glycerol alkyl esters, alkoxylated alcohols, alkoxylated carboxylic acids, alkoxylated alkyl aryls, alkoxylated sorbitan esters, alkoxylated amides, alkoxylated acetylenic diols and alkoxylated polysiloxanes where the alkoxy groups can be ethoxy, propoxy or butoxy or a mixture. Nonionic surfactants may also include block copolymers containing alkoxy groups such as block copolymers of ethylene oxide and propylene oxide (or butylene oxide) and block copolymers obtained by polycondensation of ethylene oxide and propylene oxide (or butylene oxide) on ethylenediamine.

Examples of amphoteric surfactants include alkyl betaines and alkyl amphocarboxylates.

Possible anionic surfactants include optionally ethoxylated and/or propoxylated alkyl phosphates, alkyl sulphates, alkyl sulphosuccinates, alhyl carboxylates, alkylbenzene sulphonates and alkyl sarcosinates.

Possible cationic surfactants include optionally ethoxylated and/or propoxylated amines, quaternary ammonium salts and amine oxides.

Preferred secondary adjuvants are alkyl glucosides, ethoxylated primary or secondary alcohols, ethoxylated carboxylic acids, ethoxylated sorbitan esters, block copolymers of ethylene oxide and propylene oxide, alkyl betaines, optionally ethoxylated alkyl phosphates, optionally ethoxylated alkyl sulphosuccinates, optionally ethoxylated alkyl sulphates and optionally ethoxylated alkyl carboxylates. Especially preferred secondary adjuvants are alkyl glucosides such as those disclosed in EP 220902.

In addition to the second adjuvant, further adjuvants such as ammonium sulphate, urea or humectants, such as glycerol, polyethylene glycol, sorbitol, ethylene glycol, propylene glycol and lactate salts can also be included

The proportions of alkyl amine alkoxylate adjuvant, second adjuvant and agrochemical, for example glyphosate (expressed as the acid) may vary within wide ranges depending on the desired level of activation. The ratio of the alkyl amine alkoxylate to the second adjuvant is preferably from 1 : 20 to 8 : 1, for example 1 : 10 to 6:1, especially from 1 : 6 to 4 : 1 and most preferably about 1 : 2 to 2 : 1. The proportion of alkyl amine alkoxylate adjuvant to agrochemical is from 1:40 to 3:1 for example from 1:20 to 3:1 by weight and especially from 1:10 to 1:1 by weight.

The compositions of the present invention may be used on their own but are preferably used in the form of a composition containing a carrier comprising a solid or liquid diluent. Preferably, the diluent is water to provide an essentially aqueous composition.

Compositions of the invention include both dilute compositions, which are ready for immediate use, and concentrated compositions, which require to be diluted before use, usually with water. The concentration of the composition will depend on the nature of the active ingredient. Typically, and especially for example if the active ingredient is a herbicide, the compositions contain from 0.01% to 90% by weight of the active ingredient. Dilute compositions ready for use preferably contain from 0.01 to 2% of active ingredient, while concentrated compositions may contain from 20 to 90% of active ingredient, although from 20 to 70% is usually preferred.

The solid compositions may be in the form of granules, or dusting powders wherein the agrochemical active ingredient, alkyl amine alkoxylate and secondary adjuvant are mixed with a finely divided solid diluent, e.g. kaolin, bentonite, kieselguhr, dolomite, calcium carbonate, talc, powdered magnesia, Fuller's earth, urea and gypsum. In some instances, and in particular when the active ingredient is glyphosate, inorganic salts such as ammonium sulphate may be used both as adjuvant and solid support. They may also be in the form of dispersible powders or grains, comprising a wetting agent to facilitate the dispersion of the powder or grains in liquid. Solid compositions in the form of a powder may be applied as foliar dusts.

The rate of application of the compositions of the invention will depend on a number of factors depending in particular on the nature of the active ingredient. When the active ingredient is a herbicide, such factors include, the compound chosen for use, the identity of the plants whose growth is to be inhibited, the formulations selected for use and whether the compound is to be applied for foliage or root uptake. As a general guide, however, an application rate of from 0.001 to 20 kilograms active ingredient per hectare is suitable while from 0.025 to 10 kilograms per hectare may be preferred.

When the active ingredient is a herbicide, the invention provides, in a further aspect, a process for severely damaging or killing unwanted plants, which process comprises applying to the plants, or to the growth medium of the plants, a herbicidally effective amount of a composition as hereinbefore defined.

When the active ingredient is a fungicide, the invention provides, in a further aspect, a process for severely damaging or killing unwanted fungi, which process comprises applying to the fungi, or to the growth medium of the plants, a fungicidally effective amount of a composition as hereinbefore defined.

The invention is illustrated by the following Examples in which all parts and percentages are by weight unless otherwise stated.

### EXAMPLES

### 1. Ecotoxicity Data

The following ecotoxicity results were obtained for various alkyl amine alkoxylates using the following test method. First instar Daphnia magna (less than 24 hrs old), obtained from cultures were exposed to a range of concentrations of the test amine ethoxylates in hard blended water (160-180 mg CaCO3 /litre). 10 Daphnia magna were added to each vessel which were then placed at ∼20 degrees C on a 16/8 light/dark day. Organisms were assessed at 24 and 48 hours, the effect observed being immobilisation after gentle agitation. The EC50 values were calculated using a statistical package, the 95% confidence limits are quoted in brackets.

The tested alkyl amine alkoxylates were all of the general formula (I); and the details of each are given in table 1. The amine ethoxylates were tested in the presence of potassium glyphosate in order to protonate the amine. Potassium glyphosate itself does not make a significant contribution to the daphnia toxicity. The remaining adjuvants were tested in the absence of potassium glyphosate. It can be seen that the ecotoxicity of the alkyl amine alkoxylates 3 to 6 falling within the definition of the present invention was very much lower that that for the nearest previously known compounds 1 to 2. It will be appreciated that the higher the EC50 value, the lower the toxicity.

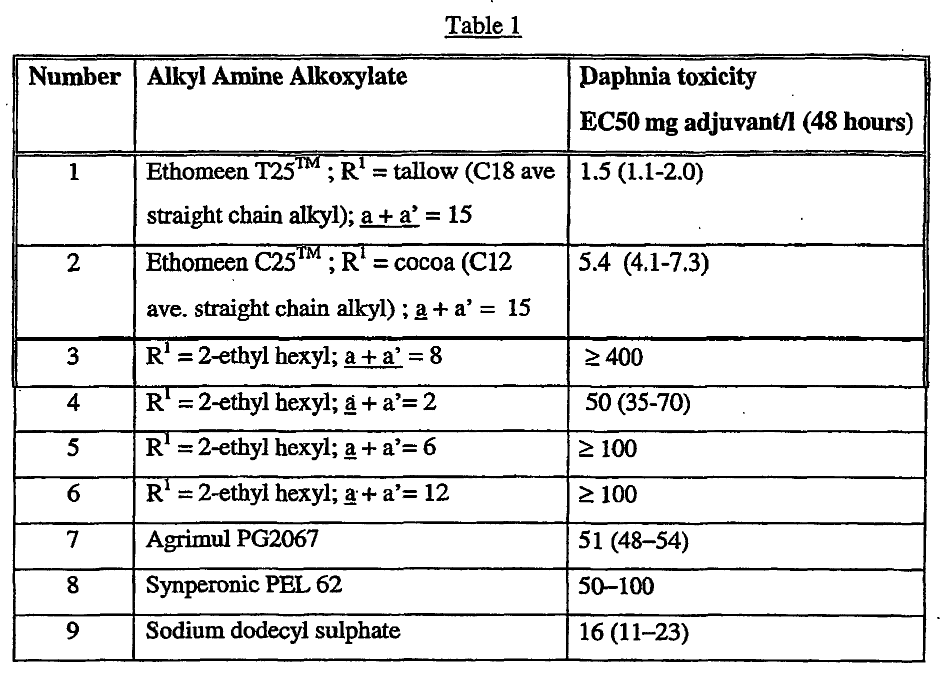

AGRIMUL PG2067 is an alkyl polyglycoside which has a degree of polymerisation of 1.7 and a mixed alkyl chain of 45% octyl and 55% decyl. AGRIMUL is a trademark of Cognis.

SYNPERONIC PE L62 is a ethylene oxide/propylene oxide block copolymer having a molecular weight of 2400 and containing 20% ethylene oxide. SYNPERONIC is a trade name of Uniquema.

### 2. Dynamic Surface Tension

The dynamic surface tension measurements were carried out with a Lauda MPT-2 maximum bubble pressure tensiometer. The dynamic surface tension at 40 msecs was determined from the maximum pressure in a bubble blown from a capillary inserted into a surfactant solution, for a bubble surface lifetime of 40 msecs. The dynamic surface tensions were determined for solutions containing 0.1%, 0.2% or 0.5% by weight of the second adjuvant in deionised water at 20°C. For comparison, the dynamic surface tension of a 0.5% by weight solution of 2-ethylhexyl amine 8EO adjusted to pH4 with dilute hydrochloric acid (to protonate the amine) was also determined at 20°C.

**Table 2**

| Sample | % by weight | Dynamic Surface Tension mNm⁻¹ at 40 msecs |
|---|---|---|
| 2-ethylhexyl amine 8EO | 0.5 | 64 |
| Agrimul PG2067 | 0.1 | 59 |
| Agrimul PG2067 | 0.2 | 47 |
| Agrimul PG2067 | 0.5 | 32 |
| Synperonic PE L62 | 0.1 | 48 |
| Synperonic PE L62 | 0.2 | 46 |
| Synperonic PE L62 | 0.5 | 42 |
| Sodium dodecyl sulphate | 0.1 | No data |
| Sodium dodecyl sulphate | 0.2 | 53 |
| Sodium dodecyl sulphate | 0.5 | 39 |

### 3. Efficacy Testing

Potassium glyphosate, in combination with the adjuvants specified below in Table 3, was applied to *Lolium perenne* (LOLPE), *Avena fatua* (AVEFA) and *Chenopodium album* (CHEAL) drilled as rows in the field, at a spray application volume of 2001/ha. Application rates were 100, 200, 400 and 600 g glyphosate acid/ha and each treatment was replicated 3 times. Data (mean of the three replicates and across all rates) is presented for a visual assessment of % control carried out 33 days after application, where 0 = unaffected and 100% = complete kill

**Table 3.**

| Adjuvant | **LOLPE** | **AVEFA** | **CHEAL** |
|---|---|---|---|
| 0.2% Ethomeen T25 (standard) | 54 | 83 | 90 |
| 0.2% 2-ethylhexyl amine 8EO | 47 | 68 | 74 |
| 0.2% 2-ethylhexyl amine 8EO + 0.1% Agrimul PG2067 | 71 | 85 | 93 |

The 2-ethylhexyl amine ethoxylate in combination with Agrimul PG2067 has provided equivalent activity to Ethomeen T25.

### 4. Comparative Efficacy Testing

Potassium glyphosate was applied at 240 g glyphosate acid equivalent/ha to *Chenopodium album* (CHEAL), *Echinochloa crus-galli* (ECHCG) and *Sorgham halepense* (SORHA) plants grown in the glass-house. All treatments were made up in deionised water and applied using a tracksprayer with a 11002 nozzle at a spray application volume of 2001/ha. All treatments were replicated 4 times. After spraying the plants were laid out in a glass-house and maintained at a temperature of 24°C by day and 16°C by night. The Agrimul PG2067 and Synperonic PEL62 adjuvants were used in a proportion 0.2% w/v. The adjuvant 2-ethylhexyl amine 8EO was used at both 0.2%w/v and 0.3%w/v. The adjuvant Sodium dodecyl sulphate was used in a proportion of 0.3%w/v. When applied as binary blends all adjuvants were used in a proportion of 0.1%w/v except Sodium dodecyl sulphate which was applied at 0.2%w/v. A visual assessment of % control, where 0=unaffected and 100=complete kill, was carried out 21 days after treatment.

**Table 4**

| 2-Ethylhexyl amine 8EO in combination with Agrimul PG2067 (0.2% total adjuvant) | | | | |
|---|---|---|---|---|
| 2-ethylhexyl amine 8EO | Adjuvant 2 | ECHCG | SORHA | CHEAL |
| 0.1% | Agrimul PG2067 (0.1%) | 98 | 94 | 89 |
| - | Agrimul PG2067 (0.2%) | 85 | 84 | 78 |
| 0.2% | - | 63 | 74 | 59 |
| Control (no adjuvant) | Control (no adjuvant) | 48 | 21 | 3 |

It will be seen that the combination of 2-ethylhexyl amine 8EO with Agrimul PG2067 according to the present invention at a total adjuvant level of 0.2% is more effective than either component on its own at the same loading of 0.2%

**Table 5**

| 2-Ethylhexyl amine 8EO in combination with Synperonic PEL62 (0.2% total adjuvant) | | | | |
|---|---|---|---|---|
| 2-ethylhexyl amine 8EO | Adjuvant 2 | ECHCG | SORHA | CHEAL |
| 0.1% | Synperonic PEL 62 (0.1%) | 91 | 91 | 71 |
| - | Synperonic PEL 62 (0.2%) | 79 | 68 | 50 |
| 0.2% | - | 63 | 74 | 59 |
| Control (no adjuvant) | Control (no adjuvant) | 48 | 21 | 3 |

It will be seen that the combination of 2-ethylhexyl amine 8EO with Synperonic PEL 62 according to the present invention at a total adjuvant level of 0.2% is more effective than either component on its own at the same loading of 0.2%

**Table 6**

| 2-Ethylhexyl amine 8EO in combination with sodium dodecyl sulphate (0.3% total adjuvant) | | | |
|---|---|---|---|
| 2-ethylhexyl amine 8EO | Adjuvant 2 | ECHCG | SORHA |
| 0.1% | Sodium dodecyl sulphate (0.2%) | 85 | 84 |
| - | Sodium dodecyl sulphate (0.3%) | 78 | 76 |
| 0.3% | - | 64 | 75 |
| Control (no adjuvant) | Control (no adjuvant) | 48 | 21 |

It will be seen that the combination of 2-ethylhexyl amine 8EO with sodium dodecyl sulphate according to the present invention at a total adjuvant level of 0.3% is more effective than either component on its own at the same loading of 0.3%.

## Claims

1. An agrochemical composition comprising
(i) an agrochemical active ingredient
(ii) an alkyl amine alkoxylate adjuvant of formula (I) and salts and amine oxides thereof 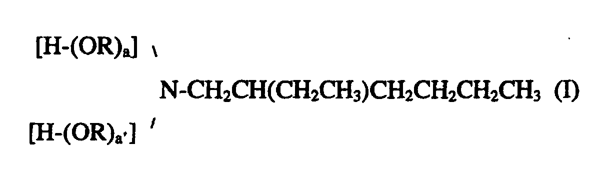 wherein the groups R are one or more C2-4 branched or straight chain alkylene groups, the sum of a and a' is 1-30, and
(iii) a secondary adjuvant, a 0.5% by weight solution in water of which has a dynamic surface tension of no more than 50mNm-1 at 40ms.

2. A composition according to claim 1 in which the agrochemical is a herbicide or fungicide.

3. A composition according to claim 1 or claim 2 in which the agrochemical is a herbicidally active agrochemical salt of glyphosate, fomesafen, glufosinate, mecoprop p, or methylchlorophenoxyacetic acid.

4. A composition according to any preceding claim in which the groups -(OR)- are one or more of oxyethylene groups or oxyisopropylene groups.

5. A composition according to claim 4 in which -(OR)- are oxyethylene groups.

6. A composition according to any preceding claim in which the sum of a and a' is 2 to 15.

7. A composition according to any preceding claim in which a 0.2% by weight solution in water of the second adjuvant has a dynamic surface tension of no more than 50mNm-1 at 40ms.

8. A composition according any preceding claim in which a 0.1% by weight solution in water of the second adjuvant has a dynamic surface tension of no more than 50mNm-1 at 40ms.

9. A composition according to any of claims 1 to 6 in which the secondary adjuvant is an alkyl glycoside, an ethylene oxide/propylene oxide block copolymer or an optionally ethoxylated alkyl sulphate.

10. A composition according to claim 1 in which the ratio of the alkyl amine alkoxylate adjuvant to the second adjuvant is from 1 : 20 to 8 : 1.

11. A composition according to claim 1 in which the ratio of alkyl amine alkoxylate adjuvant to agrochemical is from 1:40 to 3:1 by weight

12. A process of severely damaging or killing unwanted plants which process comprises applying to the plants or to the growth medium of the plants, a herbicidally effective amount of a composition according to claim 1.

13. A process for severely damaging or killing unwanted fungi, which process comprises applying to the fungi, or to the growth medium of the plants, a fungicidally effective amount of a composition according to claim 1.

## Patentansprüche

1. Agrochemische Zusammensetzung, die folgendes umfaßt:
(i) einen agrochemischen Wirkstoff
(ii) einen Alkylaminalkoxylat-Hilfsstoff der Formel (I) und Salze und Aminoxide davon: 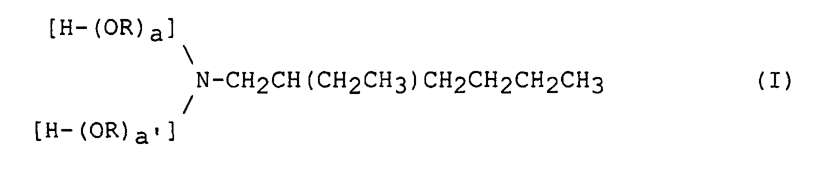 worin die Gruppen R eine oder mehrere verzweigte oder geradkettige C₂₋₄-Alkylen-Gruppen sind und die Summe von a und a' 1-30 ist, und
(iii) einen zweiten Hilfsstoff, dessen 0,5 Gew.-%ige Lösung in Wasser eine dynamische Oberflächenspannung von nicht mehr als 50 mN/m bei 40 ms hat.

2. Zusammensetzung gemäß Anspruch 1, worin die Agrochemikalie ein Herbizid oder Fungizid ist.

3. Zusammensetzung gemäß Anspruch 1 oder 2, worin die Agrochemikalie ein herbizid wirksames agrochemisches Salz von Glyphosat, Fomesafen, Glufosinat, Mecoprop-p oder Methylchlorphenoxyessigsäure ist.

4. Zusammensetzung gemäß jedem vorhergehenden Anspruch, worin die Gruppen -(OR)- eine oder mehrere OxyethylenGruppen oder Oxyisopropylen-Gruppen sind.

5. Zusammensetzung gemäß Anspruch 4, worin -(OR)-Oxyethylen-Gruppen sind.

6. Zusammensetzung gemäß jedem vorhergehenden Anspruch, worin die Summe von a und a' 2 bis 15 ist.

7. Zusammensetzung gemäß jedem vorhergehenden Anspruch, worin eine 0,2 Gew.-%ige Lösung des zweiten Hilfsstoffs in Wasser eine dynamische Oberflächenspannung von nicht mehr als 50 mN/m bei 40 ms hat.

8. Zusammensetzung gemäß jedem vorhergehenden Anspruch, worin eine 0,1 Gew.-%ige Lösung des zweiten Hilfsstoffs in Wasser eine dynamische Oberflächenspannung von nicht mehr als 50 mN/m bei 40 ms hat.

9. Zusammensetzung gemäß einem der Ansprüche 1 bis 6, worin der zweite Hilfsstoff ein Alkylglycosid, ein Ethylenoxid/Propylenoxid-Blockcopolymer oder ein gegebenenfalls ethoxyliertes Alkylsulfat ist.

10. Zusammensetzung gemäß Anspruch 1, worin das Verhältnis von Alkylaminalkoxylat-Hilfsstoff zum zweiten Hilfsstoff 1:20 bis 8:1 ist.

11. Zusammensetzung gemäß Anspruch 1, worin das Gewichtsverhältnis von Alkylaminalkoxylat-Hilfsstoff zu Agrochemikalie 1:40 bis 3:1 ist.

12. Verfahren zur ernsthaften Schädigung oder Abtötung ungewollter Pflanzen, wobei das Verfahren das Ausbringen einer herbizid wirksamen Menge einer Zusammensetzung gemäß Anspruch 1 auf die Pflanzen oder auf das Wachstumsmedium der Pflanzen umfaßt.

13. Verfahren zur ernsthaften Schädigung oder Abtötung ungewollter Pilze, wobei das Verfahren das Ausbringen einer fungizid wirksamen Menge einer Zusammensetzung gemäß Anspruch 1 auf die Pilze oder auf das Wachstumsmedium der Pflanzen umfaßt.

## Revendications

1. Composition agrochimique comprenant
(i) un principe actif agrochimique
(ii) un adjuvant à base d'alcoxylate d'alkylamine de formule (I) et de sels et d'oxydes d'amines de celui-ci 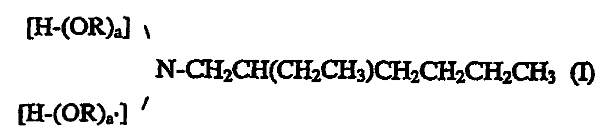 où les groupes R sont un ou plusieurs groupes alkylène à chaîne linéaire ou ramifiée en C₂₋₄, la somme de a et a' est une valeur de 1 à 30, et
(iii) un adjuvant secondaire, dont une solution à 0,5 % en masse dans l'eau a une tension de surface dynamique ne dépassant pas 50 mNm⁻¹ à 40 ms.

2. Composition selon la revendication 1, dans laquelle le produit agrochimique est un herbicide ou un fongicide.

3. Composition selon la revendication 1 ou la revendication 2, dans laquelle le produit agrochimique est un sel d'un produit agrochimique actif en tant qu'herbicide, sel du glyphosate, du fomesafen, du glufosinate, du mécoprop p ou de l'acide méthylchlorophénoxyacétique.

4. Composition selon l'une quelconque des revendications précédentes, dans laquelle les groupes -(OR)- sont un ou plusieurs groupes oxyéthylène ou groupes oxypropylène.

5. Composition selon la revendication 4, dans laquelle les groupes -(OR)- sont des groupes oxyéthylène.

6. Composition selon l'une quelconque des revendications précédentes dans laquelle la somme de a et a' est une valeur de 2 à 15.

7. Composition selon l'une quelconque des revendications précédentes, dans laquelle une solution à 0,2 % en masse du second adjuvant dans l'eau a une tension de surface dynamique ne dépassant pas 50 mNm⁻¹ à 40 ms.

8. Composition selon l'une quelconque des revendications précédentes, dans laquelle une solution à 0,1 % en masse du second adjuvant dans l'eau a une tension de surface dynamique ne dépassant pas 50 mNm⁻¹ à 40 ms.

9. Composition selon l'une quelconque des revendications 1 à 6, dans laquelle l'adjuvant secondaire est un alkylglycoside, un copolymère bloc oxyde d'éthylène/oxyde de propylène ou un alkylsulfate éthoxylé de façon optionnelle.

10. Composition selon la revendication 1, dans laquelle le rapport de l'adjuvant alcoxylate d'alkylamine au second adjuvant est de 1:20 à 8:1.

11. Composition selon la revendication 1, dans laquelle le rapport de l'adjuvant alcoxylate d'alkylamine au produit agrochimique est de 1:40 à 3:1 en masse.

12. Procédé pour endommager gravement ou détruire des plantes indésirables, ce procédé comprenant l'application, aux plantes ou au milieu de croissance des plantes, d'une quantité efficace, en termes d'activité herbicide, d'une composition selon la revendication 1.

13. Procédé pour endommager gravement ou détruire des champignons indésirables, ce procédé comprenant l'application aux champignons, ou au milieu de croissance des plantes, d'une quantité efficace, en termes d'activité fongicide, d'une composition selon la revendication 1.
